Europäisches Patentamt

European Patent Office

Office européen des brevets

(19)

(11) Numéro de publication: **0 061 968**

**B1**

(12) **FASCICULE DE BREVET EUROPÉEN**

(45) Date de publication du fascicule du brevet:
23.07.86

(51) Int. Cl.⁴: **B 64 C 25/14**

(21) Numéro de dépôt: **82400530.0**

(22) Date de dépôt: **24.03.82**

(54) Train d'atterrissage du type tripode.

(30) Priorité: **27.03.81 FR 8106155**

(43) Date de publication de la demande:
**06.10.82 Bulletin 82/40**

(45) Mention de la délivrance du brevet:
**23.07.86 Bulletin 86/30**

(84) Etats contractants désignés:
**DE GB IT SE**

(56) Documents cité:
**FR-A-1 436 709**
**FR-A-1 532 526**
**FR-A-2 315 431**
**FR-A-2 383 072**
**US-A-308 673**
**US-A-4 189 117**

(73) Titulaire: **MESSIER- HISPANO- BUGATTI (S.A), 5,
rue Louis Lejeune, F-92120 Montrouge (FR)**

(72) Inventeur: **Turiot, André, 77 Ave de l'Escadrille
Normandie Niemen, F-91390 Morsang S/Orge (FR)**

(74) Mandataire: **Chevallier, Robert Marie Georges,
Société SEDIC 40, rue Victor Basch, F-92120
Montrouge (FR)**

LIBER, STOCKHOLM 1986

EP 0 061 968 B1

## Description

La présente invention concerne les trains d'atterrissage du type tripode et plus particulièrement les trains qui sont rétractables et se logent dans des logements pratiqués dans le fuselage de l'aéronef qu'ils sont destinés à équiper.

On connait déjà de tels trains d'atterrissage du type dit tripode comme celui correspondent an préambule de la revendication 1 et décrit dans le document US—A—4189117. Ces trains comprennent essentiellement une jambe dont une extrémité est fixée en un premier point de l'avion; un amortisseur dont une extrémité est fixée en un deuxième point de l'avion différent du premier, et une contrefiche dont une extrémité est fixée en un troisième point de l'avion, bien entendu différent des deux autres. Ces trois éléments sont alors réunis sensiblement à leurs autres extrémités en un même quatrième point pour former un trièdre dont le sommet est tourné vers le bas quand l'avion roule au sol. Ce sommet ou quatrième point supporte le moyen de déplacement comme par exemple une ou plusieurs roues. Cette forme en trièdre renversé quand le train est sorti, a donné la désignation de "atterrisseurs tripodes" bien connue des techniciens de l'aéronautique. Ces points de fixation mentionnés ci-dessus ne sont donnés que comme indication générale d'un lieu de fixation, et dans la pratique ces "points" sont constitués par des cardans, rotules, axes de rotation, etc. . . ., qui sont définis en fonction de la loi de composition d'un train pour assurer le déplacement, l'amortissement et le passage du train d'une position à l'autre, c'est-à-dire, position rentrée et sortie.

Dans ce type de train dit tripode il en existe un qui permet de faire pivoter la roue d'environ 90° quand le train passe de l'une des deux positions à l'autre comme défini ci-dessus. Cette rotation de la roue permet au train quand il rentre dans son logement pratiqué dans le fuselage, d'occuper un moindre volume, et donc de pouvoir se loger plus facilement.

Cette rotation de la roue est obtenue par une structure de train dit tripode, dans laquelle l'extrémité de la contre-fiche reliée à la jambe au quatrième point défini ci-dessus comporte une bague rotative autour de la jambe et deux biellettes rotatives l'une par rapport à l'autre autour d'un même axe à une de leur extrémité, les deux autres extrémités respectives des deux biellettes étant reliées à la contre-fiche et à un axe supportant la roue de l'avion et pouvant pivoter dans un palier réalisé à cet effet dans la jambe.

Avec cette configuration, quand le train passe d'une position à une autre, la contre-fiche subit une rotation qui entraîne dans une rotation de même amplitude la roue et cela grâce à la bague pivotante montée autour de la roue.

Ce type de réalisation donne bien le résultat souhaité c'est-à-dire faire pivoter la roue quand le train passe d'une position à une autre, mais on comprend à la description, qui a été donnée ci-dessus, de la structure de ce train qu'il est relativement compliqué.

La présente invention a pour but de réaliser un train rétractable du type tripode, permettant une rotation d'un certain angle du moyen de roulement, en l'occurence, dans le cas les plus courants d'une roue quand le train passe d'une position à une autre, c'est-à-dire entre les postions "rentrée et sortie" de façon que, lorsque le train est sorti le plan de la roue soit parallèle à l'axe de l'avion et quand le train est rentré, le plan de cette roue ait subi une rotation par rapport à la jambe qui la supporte et que par exemple, ce plan de la roue reste toujours parallèle à l'axe de l'avion. Plus précisément, la présente invention a pour but de réaliser un train ayant une structure la plus simple en minimisant le nombre de ses composants par rapport à ceux de l'art antérieur, notamment pour concourir à améliorer la fiabilité de ces types de train.

C'est pourquoi la présente invention a pour objet un train rétractable du type tripode pour avion comprenant un chassis rigide comportant:

— une jambe apte à être reliée par une première extrémité à un premier point fixe dudit chassis par un premier cardan à deux, premier et deuxième, axes de rotation, ladite jambe étant montée rotative directement autour du deuxième axe, l'autre extrémité de ladite jambe supportant un axe pivotant sur lequel est apte à être monté un moyen de roulement,

— un amortisseur dont une extrémité est apte à être reliée à un deuxième point fixe dudit chassis par un deuxième cardan à deux, troisième et quatrième, axes de rotation, ledit amortisseur étant monté rotatif directement autour du quatrième axe, l'autre extrémité dudit amortisseur étant lié à un point de ladite jambe autour d'un cinquième axe de rotation, cedit point étant situé à proximité dudit axe pivotant,

— une contre-fiche dont une extrémité est apte à être reliée à un troisième point fixe dudit chassis par un troisième cardan à deux, sixième et septième, axes de rotation, ladite contre-fiche étant montée rotative directement autour du septième axe, l'autre extrémité de ladite contre-fiche étant liée à ladite jambe par un huitième axe de rotation, sensiblement à proximité dudit axe pivotant, ladite contre-fiche étant constituée au moins de deux leviers pivotant l'un par rapport à l'autre autour d'un neuvième axe de rotation,

— des moyens de liaison entre l'extrémité de ladite contre-fiche coopérant avec le huitième axe et ledit axe pivotant de support de moyen de roulement, et

— des moyens pour commander l'alignement des deux dits leviers de ladite contre-fiche, caractérisé par le fait que d'une part, lesdits premier, troisième, septième, huitième et neuvième axes sont parallèles à une même première direction, et d'autre part que les deuxième, quatrième, cinquième et sixième axes sont parallèles à une même seconde direction, les deux dites directions forment entre elles un angle non nul.

Selon une autre caractéristique, les deux dites directions sont perpendiculaires.

Selon une autre caractéristique de la présente invention les moyens de liaison entre l'extrémité de laditecontre-fiche coopérant avec le huitième axe et ledit axe pivotant, support de moyen de roulement comprennent une biellette dont les deux extrémités sont liées par des rotules avec deux pattes respectivement solidaires de ladite contre-fiche et du dit axe pivotant de façon à former deux moments de rotation respectivement par rapport audit huitième axe et au dit axe pivotant.

Selon une autre caractéristique de la présente invention lesdits premier et troisième axes sont colinéaires.

Selon une autre caractéristique de la présente invention, les deuxième et sixième axes sont colinéaires.

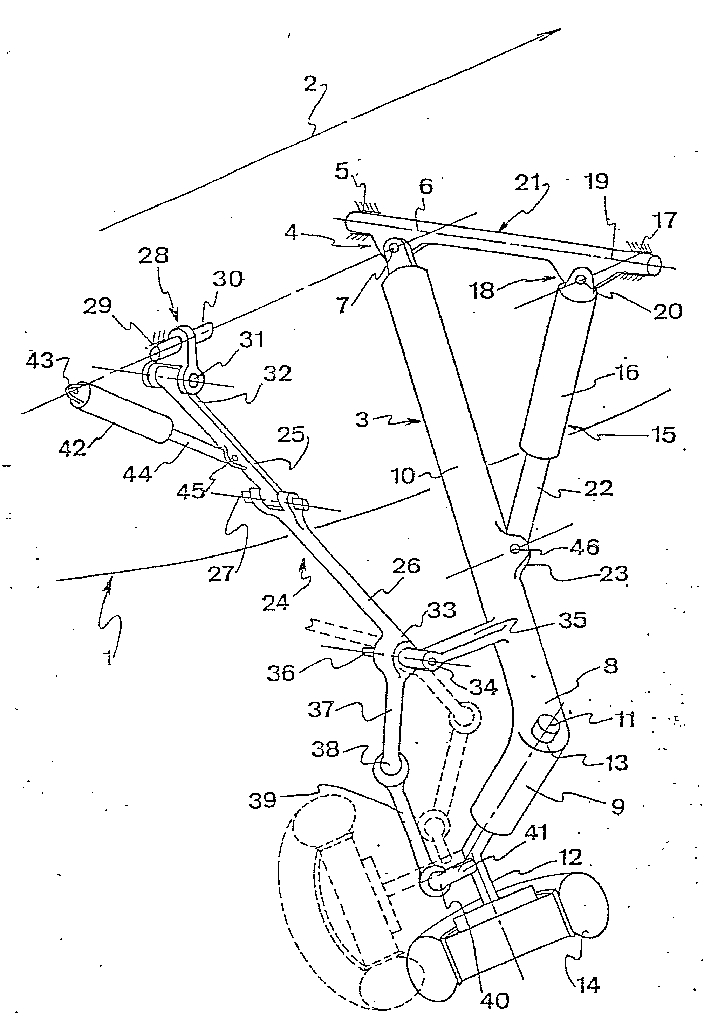

D'autres caractéristiques et avantages de la présente invention apparaîtront au cours de la description suivante donnée en regard du dessin annexé à titre illustratif mais nullement limitatif dans lequel la figure unique représente une vue en perspective d'un mode de réalisation d'un train rétractable du type tripode selon l'invention.

La figure unique représente un mode réalisation d'un train rétractable du type tripode destiné à être monté sur un avion dont le fuselage et le chassis sont schématiquement évoqués en 1 et où il apparait à titre indicatif l'axe de l'avion en 2.

Comme dit précédemment, ce type de train est destinéà se rétracter pour rentrer dans un logement aménagé le long et dans le fuselage de l'avion. C'est pourquoi, quand les trains se rétractent, il est nécessaire qu'ils prennent le minimum de place surtout quand ce sont des avions très profilés.

Une des solutions consiste à rentrer le train en faisant tourner la roue de 90° afin qu'elle reste parallèle à l'axe de l'avion et non pas perpendiculaire, car on conçoit qui c'est dans cette position qu'elle est la moins encombrante.

Le train représenté sur la figure unique permet d'obtenir ce résultat.

Pour cela: sa structure comprend une jambe 3 fixée en 5 au chassis 1 de l'avion au moyen d'une attache à la cardan 4 comprenant deux axes de rotation 6 et 7 avantageusement perpendiculaires, l'axe 6 étant solidaire du chassis 1 de l'avion tandis que l'axe 7 relie à la jambe 3 à l'attache à la cardan 4.

L'autre extrémité 8 de la jambe 3 supporte dans un palier 9, formant un coude avec le corps 10 de la jambe 3, un axe pivotant 11 dont l'extrémité qui émerge en 12 forme avec la partie 13 maintenue dans le palier 9 un angle de façon que cette partie 12 soit sensiblement parallèle au sol quand le train est monté sur un aéronef et que ce dernier est posé sur le sol.

En effet cette partie émergeante 12 est apte à consituer un moyen pour supporter un moyen de roulement comme par exemple une roue 14.

D'une façon plus classique et connue, afin de donner une bonne assise à l'avion la jambe 3 s'écarte assez du fuselage 1, surtout quand tout le poids de l'avion porte sur les trains et comprime les amortisseurs qui sont associés à ces trains.

Le train comprend donc un amortisseur 15 dont une extrémité, en l'occurence le cylindre 16, est reliée à un autre point fixe 17 du chassis de l'avion par une attache 18 à la cardan comprenant deux axes de rotation 19 et 20 de préférence perpendiculaires entre eux, et choisis de façon qu'ils soient respectivement parallèles aux axes 6 et 7 du cardan 4 et même avantageusement que les axes 6 et 19 soient colinéaires et appartiennent à un même arbre 21 maintenu dans deux paliers respectivement situés au voisinage des points 5 et 17.

L'autre extrémité de l'amortisseur en l'occurence la tige 22 est reliée à un point 23 situé sur le corps 10 de la jambe 3, par un axe de rotation 46 qui est impérativement parallèle aux deux axes 7 et 20 précédemment définis.

Comme mentionné précédemment, ce train est du type tripode, les deux premiers éléments étant constitués par la jambe 3 et l'amortisseur 15, le troisième est lui constitué par une contre-fiche 24 constituée de deux leviers 25 et 26 pivotant entre eux autour d'un axe 27. Une première extrémité 32 de cette contre-fiche, apte à se "briser" autour de l'axe 27, est reliée par une troisième attache à la cardan 28 à un troisième point fixe 29 solidaire du chassis 1 de l'avion. Cette attache comprend deux axes de rotation 30 et 31 avantageusement perpendiculaires, l'axe 30 coopérant avec le chassis, tandis que l'axe 31 relie l'attache à l'extrémité 32 de la contre-fiche, c'est-à-dire au levier 25.

L'autre extrémité 33 de cette contre-fiche ou celle du levier 26 est liée à un point 34 du corps 10 de la jambe 3. Ce point 34 est situé au voisinage du point 23 défini précédemment et relativement à proximité du palier 9.

Avantageusement il est situé sur une partie en saillie 35 qui porte un axe de rotation 36 sur lequel est montée rotative l'extrémité 33 de la contre-fiche 24.

Comme il sera explicité, ces axes 31, 27 et 36 sont parallèles entre eux et aux axes 6 et 19, et l'axe 30 est colinéaire avec l'axe 7. Cette condition impérative permet au train de fonctionner comme il sera explicité ci-après.

Dans le mode de réalisation illustré sur la figure le levier 26 est prolongé par une patte courbée 37 au delà de l'axe 36. Elle est terminée par une tête de rotule 38.

Cette tête de rotule est reliée par une biellette rigide 39 à une autre tête de rotule 40 solidaire d'une patte 41 fixée sur la partie émergeante 12 de l'axe pivotant 11. Ces deux pattes 37 et 41 reliées par la biellette 39 au moyen des rotules 38 et 40 permettent de réaliser deux moments de rotation par rapport aux deux axes 36 et 11, et comme il sera explicité ci-après, de faire pivoter la roue.

Enfin le train comprend un moyen pour commander l'alignement des deux leviers 25 et 26, et les maintenir dans cette position. Ce moyen est constitué avantageusement par un vérin verrouillable 42 dont une extrémité est liée au levier 25, et l'autre à un point fixe par rapport au chassis. Avantageusement l'extrémité 43 du vérin est liée au chassis par un cardan disposé sur la droite passant par les deux axes 30 et 7. L'autre extrémité 44 est reliée par un axe de rotation 45 au levier 25, cet axe étant parallèle aux axes 31, 27 et 36.

Le fonctionnement du train quand il roule sur le sol, et quand il passe de la position sortie à la position rentrée et inversement, est le suivant:

il est d'abord précisé que le train est représenté en position sortie et quand il est sur l'avion les axes 30, 7, 20 et 46 sont choisis de façon qu'ils soient parallèles à l'axe 2 de l'avion. La représentation en pointillé permet de montrer les déplacements relatifs des principaux éléments constitutifs du train quand celui-ci remonte dans son logement dans le fuselage 1.

Quand l'avion roule sur le sol, le vérin 42 a sa longueur maximale et les deux leviers 25 et 26 sont alignés et maintenus dans cette position par le verrouillage du vérin. Dans ces conditions, lorsque la roue 14 rencontre un obstacle en relief ou en creux, la jambe 3, la contre-fiche 24 pivotent autour des axes 30 et 17 et la tige 22 rentre ou sort du cylindre 16 (suivant les cas) pour amortir le choc, l'amortisseur subissant ainsi une rotation autour de son axe 20.

Tous ces mouvements sont possibles car comme expliqué ci-avant, les deux axes 30 et 7 sont sur une même droite (de même que l'axe du cardan 43 du vérin 42) et que les deux axes 46 et 20 sont aussi parallèles à ces deux axes 30 et 7.

Très schématiquement, la jambe 3 se déplace dans un plan perpendiculaire à l'axe de l'avion 2 ce qui fait que la roue 14 reste toujours parallèle à cet axe 2.

Par contre lorsque l'avion a pris son vol dans le sens de la direction indiquée sur l'axe 2, et que le train doit être rentré, les opérations suivantes s'effectuent:

— le vérin 42 est commandé pour obtenir une diminution de sa longueur, de cette façon l'alignement des deux leviers 25 et 26 est brisé et la traction du vérin est transmise en partie à l'axe 36.

— la jambe 3 avec son amortisseur 15 qui s'est détendu commence à tourner autour des deux axes colinéaires 6 et 19 dans le sens dextrorsum (selon le mode de représentation de la figure) alors que le levier 26 tourne dans le sens senestrorsum.

— lorsque la contrefiche est complètement pliée la jambe est remontée complètement dans le fuselage 1 de l'avion.

Cependant, on constate que lorsque le levier 26 subit sa rotation senestrorsum, il entraîne dans cette même rotation la patte 37 dont l'extrémité tend à s'éloigner de la tête de rotule 40 de la patte 41. Comme ces deux têtes sont reliées par une biellette 39, la rotation de la patte entraîne celle de la patte 41, et donc de la roue 14 autour de l'axe pivotant 11. Comme la rotation du levier 26 est d'environ 90°, la rotation de la roue est d'une amplitude équivalente.

C'est ainsi que lorsque le train est complètement relevé, la roue prend une position, par rapport à la jambe 3, comme celle qui est évoquée en pointillé sur la figure.

Enfin quand le train doit être descendu pour passer de la position train rentré à la position train sorti, les opérations décrites ci-dessus s'effectuent de la même façon mais en sens inverse, pour redonner à la roue un plan parallèle à l'axe 2 de l'avion.

**Revendications**

1. Train rétractable du type tripode pour avion comprenant un chassis rigide (1) comportant:

— une jambe (3) apte à être reliée par une première extrémité à un premier point fixe (5) dudit chassis (1) par un premier cardan (4) à deux, premier et deuxième (6, 7) axes de rotation, ladite jambe (3) étant montée rotative directement autour du deuxième axe (7), l'autre extrémité (9) de ladite jambe supportant un axe pivotant (11) sur lequel est apte à être monté un moyen de roulement (14),

— un amortisseur (15) dont une extrémité (16) est apte à être reliée à un deuxième point fixe (17) dudit chassis (1) par un deuxième cardan (18) à deux, troisième (19) et quatrième (20), axes de rotation, ledit amortisseur (15) étant monté rotatif directement autour du quatrième axe (20), l'autre extrémité (22) dudit amortisseur (15) étant lié à un point (23) de ladite jambe autour d'un cinquième axe (46) de rotation, cedit point (23) étant situé à proximité dudit axe pivotant (11).

— une contre-fiche (24) dont une extrémité est apte à être reliée à un troisième point (29) fixe dudit chassis (1) par un troisième cardan (28) à deux, sixième (30) et septième (31), axes de rotation ladite contre-fiche (24) étant montée rotative directement autour du septième axe (31), l'autre extrémité de ladite contre-fiche étant liée à ladite jambe par un huitième axe (36) de rotation, sensiblement à proximité dudit axe pivotant (11), ladite contre-fiche (24) étant constituée au moins de deux leviers (25, 26) pivotant l'un par rapport à l'autre autour d'un neuvième axe de rotation (27),

— des moyens de liaison (37, 39, 41, ...) entre l'extrémité de ladite contre-fiche (24) coopérant avec le huitième axe (36) et ledit axe pivotant (11) de support de moyen de roulement, et

— des moyens (42) pour commander l'alignement des deux dits leviers (25, 26) de ladite contre-fiche (24), caractérisé par le fait que d'une part, les dits premier (6), troisième (19), septième (31), huitième (36) et neuvième (27) axes sont parallèles à une même première direction, et d'autre part que les deuxième (7), quatrième (20), cinquième (46) et sixième (30) axes sont parallèles à une même seconde direction, les deux dites directions formant entre elles un angle non nul.

2. Train selon la revendication 1 caractérisé par le fait que les deux dites directions sont perpendiculaires.

3. Train selon l'une des revendications 1 et 2 caractérisé par le fait que les moyens de liaison entre l'extrémité de ladit contre-fiche (24) coopérant avec le huitième axe (36) et ledit axe pivotant (11), support de moyen de roulement (14) comprennent une biellette (39) dont les deux extrémités sont liées par des rotules (38, 40) avec deux pattes (37, 41) respectivement solidaires de ladite contre-fiche (24) et dudit axe pivotant (11) de façon à former deux moments de rotation respectivement par rapport audit huitième axe (36) et audit axe pivotant (11).

4. Train selon l'une des revendications précédentes caractérisé par le fait que lesdits premier (6) et troisième (19) axes sont colinéaires.

5. Train selon l'une des revendications precédéntes caractérisé par le fait que les deuxième (7) et sixième (30) axes sont coninéaires.

6. Train selon l'une des revendications précédentes caractérisé par le fait que lesdits moyens pour commander l'alignement des deux dits leviers (25, 26) sont constitués par un vérin (42) dont une extrémité (43) est apte à être liée au chassis (1) et dont l'autre extrémité (45) est liée à un des deux dits leviers (25, 26).

7. Train selon la revendication 6 caractérisé par le fait que ledit vérin (42) est verrouillable.

**Patentansprüche**

1. Einziehbares Dreibeinfahrwerk für ein ein starres Chassis (1) aufweisendes Flugzeug, umfassend:

— ein Bein (3), das mit einem ersten Ende an einem ersten festen Punkt (5) des genannten Chassis (1) mittels eines ersten Kardangelenks (4) mit zwei, ersten und zweiten (6, 7), Rotationsachsen befestigbar ist, welches Bein (3) direkt drehbar um die zweite Achse (7) ist, während das andere Ende (9) des genannten Beines eine Schwenkachse (11) trägt, auf der ein Rollmittel (15) montierbar ist,

— einen Dämpfer (15), dessen eines Ende (16) an einem zweiten festen Punkt (17) des genannten Chassis (1) mittels eines zweiten Kardangelenks (18) mit zwei, dritten (19) und vierten, (20) Rotationsachsen befestigbar ist, welcher Dämpfer (15) direkt drehbar um die vierte Achse (20) montiert ist, während das andere Ende (22) des genannten Dämpfers (15) mit einem Punkt (23) des genannten Beines um eine fünfte Rotationsachse (46) verbunden ist, welcher Punkt (23) sich nahe der genannten Schwenkachse (11) bedindet,

— eine Gegenstütze (24), deren eines Ende mit einem dritten festen Punkt (29) des genannten Chassis (1) mittels eines dritten Kardangelenks (28) mit zwei, sechsten (30) und siebenten, (31) Rotationsachsen verbindbar ist, welche Gegenstütze (24) direkt drehbar um die siebente Achse (31) montiert ist, während das andere Ende der genannten Gegenstütze mit dem genannten Bein mittels einer achten Rotationsachse (36) im wesentlichen nahe der genannten Schwenkachse (11) verbunden ist, wobei die genannte Gegenstütze (24) aus mindestens zwei Hebeln (25, 26) besteht, die zueinander um eine neunte Rotationsachse (27) schwenkbeweglich sind,

— Verbindungsmittel (37, 39, 41, . . .) zwischen dem Ende der genannten Gegenstütze (24), das mit der achten Rotationsachse (36) zusammenwirkt und der genannten Schwenkachse (11) des Trägers der Rollmittel, und

— Mittel (42) zum Steuern der Ausfluchtung der beiden genannten Hebel (25, 26) der genannten Gegenstütze (24), dadurch gekennzeichnet, daß einerseits die genannte erste (6), dritte (19), siebente (31), achte (36) und neunte (27) Achse parallel zu einer gemeinsamen ersten Richtung sind und andererseits die zweite (7), vierte (20), fünfte (46) und sechste (30) Achse parallel zu einer gemeinsamen zweiten Richtung sind, wobei die beiden genannten Richtungen miteinander einen von Null verschiedenen Winkel einschließen.

2. Fahrwerk nach Anspruch 1, dadurch gekennzeichnet, daß die beiden genannten Richtungen zueinander senkrecht sind.

3. Fahrwerk nach anspruch 1 und 2, dadurch gekennzeichnet, daß die Verbindungsmittel zwischen dem Ende der genannten Gegenstütze (24), das mit der achten Achse (36) zusammenwirkt, und der genannten Schwenkachse (11), dem Träger der Rollmittel (14), einen Lenker (39) umfaßt, dessen beide Enden mittels Kugelgelenken (38, 40) mit zwei Augen (37, 41) verbunden sind, die jeweils fest verbunden sind mit der genannten Gegenstütze (24) und der genannten Schwenkachse (11) derart, daß zwei Rotationsmomente gebildet werden relativ zu der genannten achten Achse (38) bzw. der genannten Schwenkachse (11).

4. Fahrwerk nach einem der vorangehenden Ansprüche, dadurch gekennzeichnet, daß die genannte erste (6), dritte (19) Achse koaxial sind.

5. Fahrwerk nach einem der vorangehenden Ansprüche dadurch gekennzeichnet, daß die zweite (7) und sechste (30) Achse koaxial sind.

6. Fahrwerk nach einem der vorangehenden Ansprüche, dadurch gekennzeichnet, daß die genannten Mittel zum Steuern der Ausfluchtung der beiden genannten Hebel (25, 26) von einem Arbeitszylinder (42) gebildet sind, dessen eines Ende (43) mit dem Chassis (1) und dessen anderes Ende (45) mit einem der beiden gennnten Hebel (25, 26) verbindbar sind.

7. Fahrwerk nach Anspruch 6, dadurch gekennzeichnet, daß der genannte Arbeitszylinder (42) verriegelbar ist.

**Claims**

1. Tripod type retractable landing gear for an aircraft which includes a rigid body (1), the landing gear comprising:

a leg (3) suitable for being connected at a first end to a first fixed point (5) of said body (1) via a first two-axis universal point (4) having first and second (6, 7) axes of rotation, said leg (3) being rotatably mounted directly about the second axis (7), the other end (9) of said leg supporting a pivoting shaft (11) which is suitable for having running means (14) mounted thereto;

a shock absorber (15) having one end (16) suitable for being connected to a second fixed point (17) of said body (1) via a second two-axis universal joint (18) having third (19) and fourth (20) axes of rotation, said shock absorber (15) being rotatably mounted directly about the fourth axis (20), the other end (22) of said shock absorber (15) being connected to a point (23) of said leg about a fifth axis of rotation (46), said point (23) being situated in the proximity of said pivoting shaft (11);

a side-brace (24) having one end suitable for being connected to a third fixed point (29) of said body (1) via a third two-axis universal joint (28) having sixth (30) and seventh (31) axes of rotation, said side-brace (24) being rotatably mounted directly about the seventh axis (31), the other end of said side brace being connected to said leg via an eighth axis of rotation (36), substantially in the proximity of said pivoting shaft (11), said side brace (24) being constituted by at least two levers (25, 26) which are pivotally mounted relative to one another about a ninth axis of rotation (27);

link means (37, 39, 41, . . .) between the end of said side brace (24) which co-operates with the eighth axis (36) and the said pivoting shaft (11) which supports running means; and

means (42) for controlling the alignment of said two levers (25, 26) of said side-brace (24);

characterized by the facts firstly that said first (6), third (19), seventh (31), eighth (36), and ninth (27) axes are parallel to a first common direction, and secondly that said second (7), fourth (20), fifth (46), and sixth (30) axes are parallel to a second common direction, with said directions being at a non-zero angle to each other.

2. Landing gear according to claim 1, characterized by the fact that said two directions are perpendicular.

3. Landing gear according to either one of claims 1 and 2, characterized by the fact that the link means between the end of said side-brace (24) which co-operates with the eighth axis (26) and the said pivoting shaft (11) which supports running means (14) comprise a link (39) with both ends connected via knuckle joints (38, 40) to lugs (37, 41) respectively fixed to said side-brace (37, 41) and to said pivoting shaft (11) in such a manner as to form two moments of rotation respectively about said eighth axis (36) and said pivoting shaft (11).

4. Landing gear according to any preceding claim, characterized by the fact that said first (6) and third (19) axes are colinear.

5. Landing gear according to any preceding claim, characterized by the fact that the second (7) and sixth (30) axes are colinear.

6. Landing gear according to any preceding claim, characterized by the fact that said means for controlling the alignment of said two levers (25, 26) are constituted by an actuator (42) having one end (43) suitable for being connected to the body (1) and having its other end (45) connected to one of said two levers (25, 26).

7. Landing gear according to claim 6, characterized by the fact that said actuator (42) is lockable.